# EUROPEAN PATENT SPECIFICATION

(11) **EP 1 028 645 B1**
(45) Date of publication and mention of the grant of the patent: **09.05.2001**
(21) Application number: 97911442.8
(22) Date of filing: 03.11.1997
(51) Int. Cl.: A47J 31/54

(54) **IMPROVED COFFEE MACHINE**
VERBESSERTE KAFFEEMASCHINE
MACHINE A CAFE AMELIOREE

(43) Date of publication of application: 23.08.2000
(73) Proprietor: LA SAN MARCO S.p.A., 34072 Gradisca D'Isonzo (IT)
(72) Inventor: DALLA TORRE, Luigi, 34072 Gradisca D'Isonzo (GO) (IT)
(74) Representative: D'Agostini, Giovanni, Dr.
(86) International application number: IT9700271
(87) International publication number: WO9922629

(56) References cited:
- EP-A- 0 540 440
- WO-A-94/00045
- DE-A- 2 747 990
- US-A- 3 267 996
- US-A- 3 314 357

## Description

### Technical Field

This invention has for object a coffee machine, particularly for espresso coffee.

The innovation finds particular even if not exclusive application in the machines for espresso coffee of bars, services and restaurants, not excluding that the innovation will be applied also to other coffee machines and similar also for household use.

### Background Art

In prior art it is known that the coffee machine coffee includes a closed circuit of hot water / vapour overheated to about. 120°, that is made circulate for the respective heating, through an heat exchanger within an hot water boiler generally at 10 atmospheres and obviously at the temperature about 120° C. A coffee machine according to the preamble of claim 1 is known from EP-A-540440. This hot water circuit is made pass through a deliver where takes place the percolation, measured by means of an electro-valve control.

The loss of the hot water dose is normally integrated in turn with the addition of cold water by a nozzle within said heat exchanger, in this way the temperature of the hot water in recirculation is also adjusted maintaining it at an optimal value according to needs between 120 and 92°C.

This solution however creates serious problems of failures to the percolation that takes place in the deliverer at a considerable distance and in a time decidedly subsequent respect to the cold water injection, that notoriously occurs, after there has been a coffee discharge, that is when the pressure is excessively reduced.

The percolation processing is consequently not uniform, precisely because the temperature of the hot water during the percolation cannot to be rationally controlled with this method, with consequent decrease of the quality of the coffee that instead, as it is known, becomes optimal only at a well determined temperature of the water in percolation.

Temperature control systems proved to be all artful, complex and little reliable and also poorly efficient.

After attentive analysis of the problem it was verified that the main cause derives substantially in that when the hot water under pressure (overheated saturate and compressed vapour at about 120°C), is freed for the suitable dose from electro-valve into said deliverer, it gets free by decreasing the pressure and transforming itself progressively in vapour with temperature lowering for the known thermodynamics law PV (pressure x volume) =R T (constant x Absolute temperature).

The lowering however cannot be checked in a precise way, so that in order to calibrate a machine, there must be an action upstream on the circuit in boiler as shown above.

The consequence is that the at the exit temperature is not constant because it depends from the frequency of water injections and from the times that elapse between one injection and the other, thus, for example, a machine that works much will have a temperature excessively low of the vapour in percolation (also less than 90°) while when the machine works less it will give an excessive temperature.

(The temperature generally oscillates in circuit between 120° C and 92°C)

This oscillation is therefore harmful, not so much in itself but for the mentioned consequences .

The aim of this invention is to avoid the above-mentioned drawbacks.

This and other aims are reached by means of a coffee machine as claimed in claim 1.

Since the heat exchange within the deliverer takes place by means of the passing of a cold water tube upstream of the percolator and downstream the electro-valve that releases the predetermined amount of hot water, the cooling intervenes immediately on the exit of the overheated saturate vapour jet, lowering its temperature in a controlled way, but always maintaining it within the optimal values.

It will obtained in this way a controlled exit of vapour in percolation, at a temperature also controlled, neither too low nor too high. Other preferred features are disclosed in dependant claims 2 and 3. These and other advantages will appear from the following description of a preferred solution, with the aid of the included drawings, whose details are not to be considered as limitative but only supplied as an example.

Figure 1 is a schematic view on the vertical transversal plane with respect to the boiler and to a deliverer.

Figure 2 is a plant partial schematic view of the deliverer and of the cold water circuit which passes through it according to the present invention.

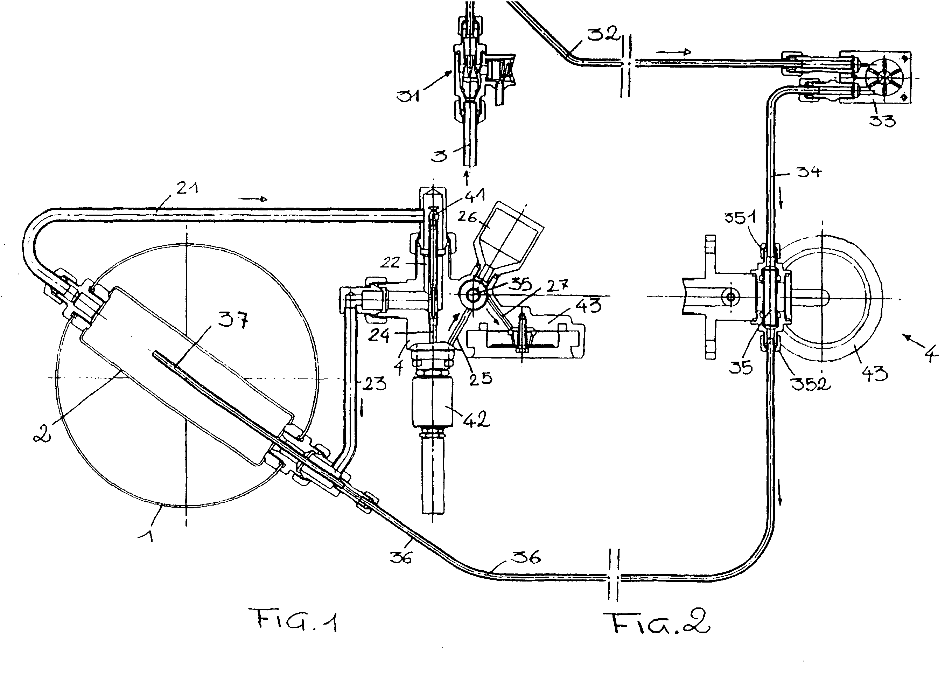

Referring to the figures it is observed that with 1 is indicated the boiler, with 2 the heat exchanger within which the hot water passes, and within which it is injected by injector (37) to reset the necessary amount of cold water coming from the net (3).

The hot water, from the heat exchanger (2), passes, through the duct (21), to the deliverer (4) that opens into a percolation device (43) for making the coffee and returns to the exchanger (2) by means of a return piping (23).

On the inside of the deliverer (4), the hot water is sucked by an axial tubular nozzle (41), that brings to an electro-valve (42) for checking on and delivering by a discharge (25) in a pre-chamber that flows diametrically in a plenum chamber (26) and by a side duct (27) to said percolator.

The cold water (3), by means of a cock valve (31), and a flues (32) to a volumetric meter (33), according to the present invention, instead of going directly to the boiler (1) with the injector (37) within said heat exchanger (2), passes through the deliverer (4) just frontally to the exit jet of the hot water/vapour (25) of the electro-valve (42) and in front of said plenum chamber (26), by a passing-through small tube 35, interchangeable and fasteneable by annular head opposite screws with sealing gaskets (351,352).

In this way, it will be sufficient to replace the heat exchanger joining small tube (35), by an other one of different thickness or of different diameter to vary the exit temperature of the overheated water/vapour, by means of the discharge duct (27), to the percolator (43).

In fact in this way the jet will pass strongly at first from the electro-valve (12) to the plenum chamber (26), where the compressed air will deviate it toward the discharge duct (27) of the percolator (43), striking again the surface of said heat exchange small tube (35) and therefore reaching a temperature decidedly lower but within the range of 92°C for obtaining the optimal espresso coffee.

Thus it is created a vorticose motion and there will therefore be a reduction of the temperature in a controlled and continuous way from 120°C to 92°C or other wished optimal temperature value. In fact for increasing the temperature of exit to the percolator, it will be sufficient to change the heat exchange small tube (35) rather than for example of 1 mm of thickness, with one of 0,5 mm of thickness, or any thickness gradation to vary considerably the few discharge degrees at the percolation.

In this way without complicated mechanisms it is possible to calibrate the machine according to the own specifical needs, in optimal way.

Advantageously the depth of penetration of the cold water injector (37) within the heat exchanger (2) in boiler (1) can as also be reduced, not requiring anymore to cool the water in this area, but providing it directly downstream before the exit.

Of course the orientations of the holes in the cross prechamber can be selected as desired for specifical solutions.

Similarly it will be possible to play also on the cold water passing diameters.

## Claims

1. Espresso coffee machine of the type involving:
- a hot water / overheated vapour closed circuit, that is heated by an heat exchanger (2) in a boiling water boiler preferably under pressure (1), where said closed circuit (2,21,22,23) passes at least in a delivering device (4) provided with a percolator (43) and an electro-valve (42),
- a cold water circuit (3) that is injecting water in an adjusted way (37) within said heat exchanger (2) to supply in said closed circuit the water delivered in said delivering device (4,) wherein control means, to control the exit temperature of the water / overheated vapour, in said percolator (43), are provided,
characterised in that:
a second heat exchanger within said delivering device is provided, said second heat exchanger being realised by means of the passing of a cold water small tube (35) upstream of said percolator (43) and downstream of said electro-valve (42) that releases the hot water predetermined amount (41) so as to enable the adjustment and checking of the exit temperature of the water / overheated vapour in said percolator (43).

2. Espresso coffee machine according to claim 1., characterised in that said heat exchange small tube (35) before of the percolation is interchangeable with another one of a different diameter and/or thickness to vary the respective heat transfer entity to the fluid passing to it externally.

3. Espresso coffee machine according to claim 1., characterised in that said heat exchange small tube (35) before of the percolation, is placed in a cross prechamber between the discharge jet (25) of said electro-valve (42) and a plenum chamber (26) dismetrically opposite it, and sideways to the exit jet (27) going to said percolator (43).

## Patentansprüche

1. Espresso-Kaffeemaschine mit:
- einem geschlossenen Kreislauf mit heißem Wasser / überhitztem Dampf, der von einem Wärmetauscher (2) in einem Kochwasserboiler (1) beheizt wird, der vorzugsweise unter Druck steht, wobei besagter geschlossener Kreislauf (2,21,22,23) mindestens in eine Zufuhrvorrichtung (4) mit einer Kaffeemaschine (43) A führt;
- einem Kaltwasser-Kreislauf (3), der Wasser kontrolliert (37) in besagten Wärmetauscher (2) einspritzt, um an besagten geschlossenen Kreislauf das Wasser zu liefern, das in besagter Zufuhrvorrichtung (4) geliefert wird, und einem Elektro-Ventil (42), wobei Kontrollmittel zur Kontrolle der Ausgangstemperatur des Wassers / des überhitzten Dampfes in besagter Kaffeemaschine (43) vorgesehen sind,
gekennzeichnet dadurch, dass:
- ein zweiter Wärmetauscher innerhalb besagter Zufuhrvorrichtung (4) vorgesehen ist, wobei besagter zweite Wärmetauscher mittels des Übergangs eines kleinen Kaltwasserrohrs (35) verwirklicht wird, besagter Kaffeemaschine (43) vorgeschaltet und besagtem Elektroventil (42) nachgeschaltet, das das heiße Wasser in vorausbestimmter Menge (41) freisetzt zwecks Einstellung und Kontrolle der Ausgangstemperatur des Wassers / überhitzten Dampfes in besagter Kaffeemaschine (43).

2. Espresso-Kaffeemaschine nach Anspruch 1., gekennzeichnet dadurch, dass besagtes kleines Wärmeaustauschrohr (35) vor dem Perkolieren mit einem anderen von anderem Durchmesser und/oder Dicke austauschbar ist, um die betreffende Wärmemenge zu variieren, die auf die Flüssigkeit übertragen wird, die außen an ihm vorbeifließt.

3. Espresso-Kaffeemaschine nach Anspruch 1., gekennzeichnet dadurch, dass besagtes kleines Wärmeaustauschrohr (35) vor dem Perkolieren in einer Kreuzungsvorkammer zwischen dem Austrittsstrahl (25) von besagtem Elektroventil (42) und einer Füllkammer (26) diametral gegenüber davon liegt, und seitlich zu dem Austrittsstrahl (27), der zu besagter Kaffeemaschine (43) führt.

## Revendications

1. Machine à café Expresso du type contenant:
- un circuit fermé d'eau chaude / vapeur surchauffée, chauffé par un échangeur de chaleur (2) dans une chaudière d'eau bouillante de préférence sous pression (1), où ledit circuit fermé (2,21,22,23) passe au moins par un dispositif de livraison (4) pourvu d'un percolateur (43) A;
- un circuit d'eau froide (3) qui injecte de l'eau d'une façon ajustée (37) à l'intérieur dudit échangeur de chaleur (2) afin de pourvoir dans ledit circuit fermé de l'eau délivrée dans ledit dispositif de livraison (4) et une électrovalve (42), dans laquelle sont pourvus des moyens de contrôle, pour contrôler la température de sortie de l'eau / vapeur surchauffée, dans ledit percolateur (43),
caractérisé en ce que:
- un second échangeur de chaleur dans ledit dispositif de livraison (4) est pourvu, où ledit second échangeur de chaleur réalisé en moyennant le passage d'un petit tuyau d'eau froide (35) en amont dudit percolateur (43) et en aval de ladite électrovalve (42) libère la quantité prédéterminée d'eau chaude (41) afin de permettre le réglage et le contrôle de la température de sortie de l'eau / vapeur surchauffée dans ledit percolateur (43).

2. Machine à café Expresso selon la revendication 1., caractérisée en ce que ledit petit tuyau d'échange de chaleur (35) est interchangeable préalablement au filtrage avec un autre d'un diamètre et/ou une épaisseur différente pour varier l'entité de transfert de chaleur respective du fluide circulant par sa partie extérieure.

3. Machine à café Expresso selon la revendication 1., caractérisée en ce que
ledit petit tuyau d'échange de chaleur (35) préalablement au filtrage, est placé dans une préchambre en croix entre le jet de déchargement (25) de ladite électrovalve (42) et une chambre de tranquillisation (26) qui l'oppose diamétralement, et de côté au jet de sortie (27) vers ledit percolateur (43).
